# EUROPEAN PATENT SPECIFICATION

(11) **EP 3 762 203 B1**
(45) Date of publication and mention of the grant of the patent: **27.07.2022**
(21) Application number: 19710156.1
(22) Date of filing: 20.02.2019
(51) Int. Cl.: B29C 45/14, B60R 13/08, B32B 5/02, B32B 27/08, B32B 27/12, B32B 27/32, B32B 27/34, B32B 5/14, B29K 105/08, B29L 31/30

(54) **ENGINE COMPARTMENT COMPONENT IN CO-MOLDED LAYERS FOR VEHICLES**
MOTORRAUMKOMPONENTE IN CO-GEFORMTEN SCHICHTEN FÜR FAHRZEUGE
ÉLÉMENT POUR COMPARTIMENT MOTEUR EN COUCHES CO-MOULÉES POUR VÉHICULES

(30) Priority: 06.03.2018 IT 201800003309
(43) Date of publication of application: 13.01.2021
(73) Proprietor: Sapa S.P.A., 20144 Milano (MI) (IT)
(72) Inventor: AFFINITA, Antonio, 80121 Napoli (NA) (IT)
(74) Representative: Fiammenghi, Eva
(86) International application number: PCT/IB2019/051368
(87) International publication number: WO 2019/171194

(56) References cited:
- EP-A1- 2 017 135
- WO-A1-02/096626
- WO-A1-2012/152503
- JP-A- H 091 586
- JP-A- H07 111 901
- US-A1- 2017 060 190

## Description

### Field of the art

The present invention operates in the automobile industry field, in particular in components relative to the engine compartment of vehicles. Even more in detail, the present component of the engine compartment is constituted by a plurality of co-molded layers which define a single inseparable element.

### Prior art

At the present state of the art, each component of the engine compartment is provided with a selection of materials such to render these elements quite effective for the operation thereof, endowing it with mechanical strength, thermal strength and sound absorbance.

Heat guards are situated in various places on vehicles, in particular in vicinity to the engine and the engine compartment so that this is not overheated, and they also protect the interior of the passenger/driver compartment from high temperatures.

The problem pertaining to this type of constituent elements of the vehicle lies in the fact that the optimal characteristics are obtained from the combination of the mechanical and thermal properties of multiple materials.

When multiple materials are arranged in layers, there is a risk of separation of the different layers. Analogously, when a more rigid material is coupled to a less rigid material, one can observe a crushing of this second material, with consequent loss of the required performances.

When multiple materials are processed together in order to combine the properties thereof in a monolithic and hence indivisible object, the production process comprises various steps which increase the cost of the final object and hence lower the profitability of the industrial plant engaged in the production thereof.

Several international patents regard this vehicle component type, such as the patent of Korean origin, extended worldwide as WO 2016 190 596. Such patent regards a material of polyketone fiber obtained via centrifugation of the copolymer, washing, drying and stretching. The polyketone fiber has excellent properties of resistance to mechanical stresses, elongation, water resistance, heat resistance, thermal conductivity and allows the production of objects that are highly resistant not only at high temperatures but they can even be bulletproof.

Although the quality of the object thus produced is high, given the high production cost such object is used for tanks and other military equipment, while it is inconvenient for more mass productions.

EP 2 017 135 discloses a shield constituted by a metallic layer with recesses, which are overdrawn by a flexible fiber material, where the fiber material can be a woven fabric, a knitted fabric or a non-woven fabric. The fiber material is fully provided on one of the shield's upper surfaces or partially provided with a coating that is made up of metal or plastic. The fiber material is clamped in an edge region of the metallic layer that is beaded in S-form. Each recess is an opening heading through the metallic layer or a cavity in an outer edge region of the metallic layer.

Given the recent request of the automobile manufacturers to include the vehicle engine in a completely closed compartment, one object of the present invention is to propose a new and innovative type of component of the engine compartment that is made in layers, obtained by means of a single step of injection co-molding.

### Description of the invention

According to the present invention, a component of the engine compartment is made in co-molded layers, for any vehicle type, which effectively resolves the abovementioned problems.

This advantageously comprises:
- a first layer of carbon fiber fabric, constituted by a sheet of thickness comprised between 0.5 mm and 20 mm and with weight comprised between 100 g/m² and 1,000 g/m²;
- a second plastic layer, constituted by any one thermoplastic polymer, preferably polypropylene or polyamide, with thickness comprised between 0.5 mm and 5 mm;
- a possible third barrier layer, constituted by any one plastic polymer, a resin or a fabric, with thickness comprised between 0.3 mm and 2 mm, placed in an intermediate position of the first layer of carbon fiber fabric.

In the preferred embodiment of the present invention, the second plastic layer is constituted by polyamide 6 or 66, possibly admixed with glass fiber.

The attainment of the component of the engine compartment thus composed occurs by means of a common co-molding process in which the layer of carbon fiber fabric is positioned inside a common mold for injection molding.

The plastic material is subsequently back-injected at the inner side of the first layer of carbon fiber fabric.

Possibly, said plastic layer can have, on its outer side, lightening recesses with preferably circular form, which contribute to eliminating the unnecessary weight from the automobile components.

Advantageously, the weft of the first layer of carbon fiber is such to allow the penetration of the plastic material, when it is injected into the mold while still molten, for a depth corresponding to a value comprised between 2% and 30% of the thickness of the first layer of carbon fiber fabric.

Still more preferably, the depth of penetration will be comprised between 10% and 20% of the thickness of the first layer.

The component of the engine compartment, subject of the present invention, has a first layer of carbon fiber fabric constituted by a first portion and by a second portion that differ from each other due to the weft which is wider in the first portion and denser in the second portion.

This differentiation is aimed to progressively slow, up to stopping, the penetration of the plastic material inside the carbon fiber, obtaining the desired manufactured article.

In some still more advantageous versions of the engine component described in detail hereinbelow, metal inserts are included in the co-molded part which, depending on the positioning, can have two purposes: anti-crushing function for the component thus made, or said metal inserts can be hinges that serve for lifting the cover of the engine compartment. Possibly, in the co-molding of the component, an aluminum heat guard can also be inserted, which is included among those belonging to the prior art.

Advantageously, due to the characteristics of the constituent materials, the component of the engine compartment of the present invention can also have the function of acoustic absorption and/or flame-retardant function.

The advantages offered by the present invention are clear in light of the description set forth up to now and will be clearer due to the enclosed figures and the relative detailed description.

### Description of the figures

The invention will be described hereinbelow in at least one preferred embodiment by way of a non-limiting example with the aid of the enclosed figures, in which:

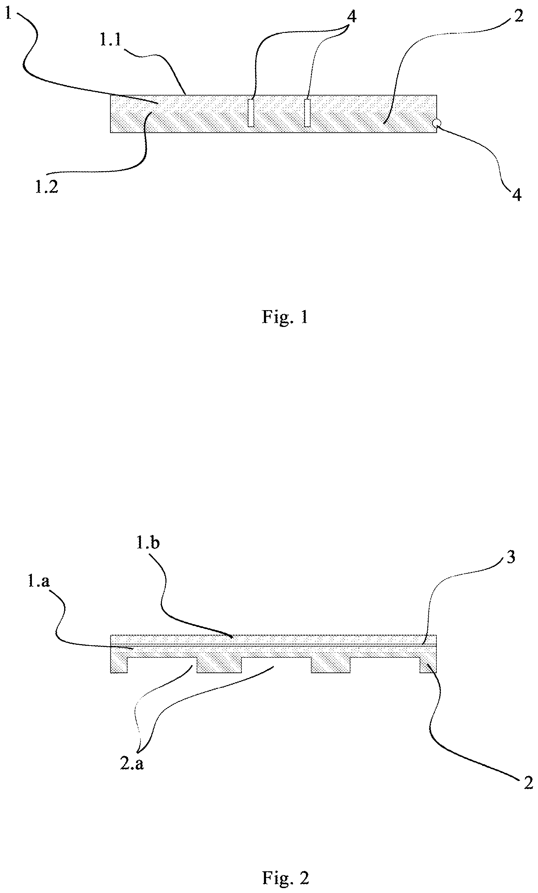

- FIGURE 1 shows an embodiment in three layers, in which one sees the metal inserts 4 which confer a greater structural rigidity to the component constituted by the first layer of carbon fiber fabric 1 and the second plastic layer 2.
- FIGURE 2 illustrates the first layer of carbon fiber fabric 1 has a first portion 1.a in contact with the second plastic layer 2, a second portion 1.b towards the outer side 1.1 and the barrier 3 is placed in an intermediate position inside the first layer of carbon fiber fabric 1. On the outer side of the second plastic layer 2, the lightening recesses 2.a are visible.

### Detailed description of the invention

The present invention will now be illustrated merely as a non-limiting or non-constraining example, with reference to the figures which illustrate several embodiments relative to the present inventive concept.

With reference to FIG. 1, the present component of the engine compartment is shown. This is constituted by only two layers: a first layer of carbon fiber fabric 1 and, at the inner side 1.2 of the latter, a plastic layer 2.

For the purpose of material savings and lightening of each component forming the vehicle, said second plastic layer 2 can have lightening recesses 2.a configured in the widest possible manner without negatively affecting the mechanical strength of the component thus made.

The metal inserts 4 are seen in section; these, depending on the future positioning of the component thus made inside the engine compartment, can have structural function, for supporting the first layer of carbon fiber 1 and/or hinge function for opening the cover of the engine.

FIG. 2 shows the presence of a possible additional layer constituted by a barrier 3 made of any one plastic polymer, of a fabric or of a resin situated within the thickness of the layer of carbon fiber fabric 1. Said barrier 3 is adapted to stop the infiltration of the thermoplastic polymer forming the second plastic layer 2 inside the first layer of carbon fiber fabric 1.

Said first layer of carbon fiber fabric 1 has thickness comprised between 0.5 mm and 20 mm and its weight is comprised between 100 g/m² and 1,000 g/m².

In a preferred embodiment the weight is equal to 500 g/m².

In a further preferred embodiment, the weight is equal to 300 g/m².

The second layer 2 is constituted by a thermoplastic polymer, preferably polypropylene or polyamide, still more preferably polyamide 6 or 66, and has thickness comprised between 0.5 mm and 5 mm.

Possibly, said thermoplastic polymer can be previously admixed with glass fiber.

The manufacturing of the component of the engine compartment occurs by means of the known technique of co-molding, in a common injection mold.

In a first step, the first layer of carbon fiber fabric 1 is situated inside the mold. Subsequently, after the closure of the mold, the molten plastic material is injected at the inner side 1.2 of the carbon fiber 1.

The weaving of the fibers of the first layer 1 is such to allow the penetration of the plastic material still in fluid state for a depth comprised between 2% and 30% of the thickness of the first layer of carbon fiber fabric 1 starting from its inner side 1.2.

Still more preferably, the plastic penetrates into the fiber for 10%-20% of its thickness.

For the purpose of better controlling the penetration of the two materials - a characteristic which renders the engine compartment component monolithic - the first layer of carbon fiber fabric 1 can be configured with a differentiation of the weft.

In this case, it will be constituted by a first portion 1.a, in vicinity to said inner side 1.2, provided with a wider weft adapted to facilitate the penetration of the plastic material 2 up to the desired depth. A second portion 1.b, instead, in vicinity to the outer side 1.1, will be provided with a denser weft adapted to progressively slow and finally block the penetration of the plastic material 2 during said the co-molding.

Based on the properties of the selected materials and their thicknesses and processing, it is possible to also obtain sound absorbance and fire resistance of the engine compartment component, subject of the present invention.

If the high operating temperatures thus require, the component can include a further layer constituted by an aluminum heat guard, it too co-molded.

Finally, it is clear that modifications, additions and variations that are obvious for the man skilled in the art can be made to the invention described up to now, without departing from the protective scope that is provided by the enclosed claims.

## Claims

1. Engine compartment component in co-molded layers for vehicles comprising:
- a first layer of carbon fiber fabric (1) consisting of a sheet of thickness of between 0.5 mm and 20 mm and a weight of between 100 g/m² and 1,000 g/m², adapted to be positioned inside a common mold for injection molding before the injection of
- a second plastic layer (2), consisting of any one thermoplastic polymer, with a thickness of between 0.5 mm and 5 mm, adapted to be made by back-injection in said mold for injection molding containing said first layer of carbon fiber fabric (1), determining a co-molding process; said back-injection occurring at an inner side (1.2) of said first layer of carbon fiber fabric (1);
said first layer of carbon fiber fabric (1) being provided with a weft of the fibers adapted to allow the penetration of said second plastic layer (2), during the co-molding process, for a predetermined thickness starting from said inner side (1.2) of said first layer of carbon fiber fabric (1); **characterised in that** said first layer of carbon fiber fabric (1) consists of a first portion (1.a), in the vicinity of said inner side (1.2), provided with a wider weave adapted to facilitate the penetration of the plastic polymer (2) during said co-molding up to the desired thickness; said first layer of carbon fiber fabric (1) also consists of a second portion (1.b), in the vicinity of the outer side (1.1), provided with a denser weave adapted to progressively slow down and finally block the penetration of the plastic polymer (2) during said co-molding.

2. Engine compartment component in co-molded layers for vehicles, according to the preceding claim 1, **characterized in that** it comprises a third barrier layer (3), consisting of any plastic polymer or resin or fabric adapted to be positioned in an intermediate position inside said first layer of carbon fiber fabric (1); said barrier layer (3) having a thickness of between 0.3 mm and 2 mm.

3. Engine compartment component in co-molded layers for vehicles, according to any one of the preceding claims, **characterized in that** said plastic layer (2) is made of polypropylene or polyamide.

4. Engine compartment component in co-molded layers for vehicles, according to any one of the preceding claims, **characterized in that,** during the co-molding, the penetration of the molten plastic material inside the first layer of carbon fiber fabric (1) reaches a depth of between 2% and 30% of the thickness of said first layer of carbon fiber fabric (1).

5. Engine compartment component in co-molded layers for vehicles, according to any one of the preceding claims, **characterized in that** said second plastic layer (2) is provided with a plurality of lightening recesses (2.a).

6. Engine compartment component in co-molded layers for vehicles, according to any one of the preceding claims, **characterized in that** said first layer of carbon fiber fabric (1) is provided with a plurality of metal inserts (4) co-molded therein, adapted to act as a structural support.

7. Engine compartment component in co-molded layers for vehicles, according to any one of the preceding claims, **characterized in that** said first layer of carbon fiber fabric (1) is provided with at least one laterally co-molded metal insert (4) adapted to act as a hinge.

8. Engine compartment component in co-molded layers for vehicles, according to any one of the preceding claims, **characterized in that** it is integrally flame-retardant.

9. Engine compartment component in co-molded layers for vehicles, according to any one of the preceding claims, **characterized in that** it has sound-absorbing properties.

## Patentansprüche

1. Motorraumkomponente in co-geformten Schichten für Fahrzeuge, die aufweist:
- eine erste Schicht aus Kohlefasergewebe (1), die aus einem Bogen mit einer Dicke zwischen 0,5 mm und 20 mm und einem Gewicht zwischen 100 g/m² und 1.000 g/m² besteht, die dazu geeignet ist, im Inneren einer üblichen Form zum Spritzgießen positioniert zu werden, und zwar vor der Einspritzung
- einer zweiten Kunststoffschicht (2), die aus einem beliebigen thermoplastischen Polymer mit einer Dicke zwischen 0,5 mm und 5 mm besteht und die dazu geeignet ist, durch Hinterspritzung in der Form zum Spritzgießen, die die erste Schicht aus Kohlefasergewebe (1) enthält, hergestellt zu werden, wodurch ein Co-Formungsprozess bestimmt wird; wobei die Hinterspritzung an einer Innenseite (1.2) der ersten Schicht aus Kohlefasergewebe (1) erfolgt;
wobei die erste Schicht aus Kohlefasergewebe (1) mit einem Schuss der Fasern versehen ist, der dazu geeignet ist, das Eindringen der zweiten Kunststoffschicht (2) während des Co-Formungsprozesses für eine vorgegebene Dicke, beginnend an der Innenseite (1.2) der ersten Schicht aus Kohlefasergewebe (1), zu ermöglichen; **dadurch gekennzeichnet, dass** die erste Schicht aus Kohlefasergewebe (1) aus einem ersten Teil (1.a) in der Nähe der Innenseite (1.2) besteht, der mit einer breiteren Bindung versehen ist, die dazu geeignet ist, das Eindringen des Kunststoffpolymers (2) während des Co-Formens bis zu der gewünschten Dicke zu erleichtern; wobei die erste Schicht aus Kohlefasergewebe (1) auch aus einem zweiten Teil (1.b) in der Nähe der Außenseite (1.1) besteht, der mit einer dichteren Bindung versehen ist, die dazu geeignet ist, das Eindringen des Kunststoffpolymers (2) während des Co-Formens zunehmend zu verlangsamen und schließlich zu blockieren.

2. Motorraumkomponente in co-geformten Schichten für Fahrzeuge nach dem vorhergehenden Anspruch 1, **dadurch gekennzeichnet, dass** sie eine dritte Sperrschicht (3) aufweist, die aus einem beliebigen Kunststoffpolymer oder Harz oder Gewebe besteht, das dazu geeignet ist, in einer Zwischenposition innerhalb der ersten Schicht aus Kohlefasergewebe (1) angeordnet zu werden; wobei die Sperrschicht (3) eine Dicke zwischen 0,3 mm und 2 mm aufweist.

3. Motorraumkomponente in co-geformten Schichten für Fahrzeuge nach einem der vorhergehenden Ansprüche, **dadurch gekennzeichnet, dass** die Kunststoffschicht (2) aus Polypropylen oder Polyamid hergestellt ist.

4. Motorraumkomponente in co-geformten Schichten für Fahrzeuge nach einem der vorhergehenden Ansprüche, **dadurch gekennzeichnet, dass** während des Co-Formens das Eindringen des geschmolzenen Kunststoffmaterials in der ersten Schicht aus Kohlefasergewebe (1) eine Tiefe zwischen 2 % und 30 % der Dicke der ersten Schicht aus Kohlefasergewebe (1) erreicht.

5. Motorraumkomponente in co-geformten Schichten für Fahrzeuge nach einem der vorhergehenden Ansprüche, **dadurch gekennzeichnet, dass** die zweite Kunststoffschicht (2) mit einer Vielzahl von Erleichterungsaussparungen (2.a) versehen ist.

6. Motorraumkomponente in co-geformten Schichten für Fahrzeuge nach einem der vorhergehenden Ansprüche, **dadurch gekennzeichnet, dass** die erste Schicht aus Kohlefasergewebe (1) mit einer Vielzahl von darin co-geformten Metalleinlagen (4) versehen ist, die geeignet sind, als Strukturträger zu dienen.

7. Motorraumkomponente in co-geformten Schichten für Fahrzeuge nach einem der vorhergehenden Ansprüche, **dadurch gekennzeichnet, dass** die erste Schicht aus Kohlefasergewebe (1) mit mindestens einem seitlich co-geformten Metalleinsatz (4), der dazu geeignet ist, als Gelenk zu dienen, versehen ist.

8. Motorraumkomponente in co-geformten Schichten für Fahrzeuge nach einem der vorhergehenden Ansprüche, **dadurch gekennzeichnet, dass** sie integral flammhemmend ist.

9. Motorraumkomponente in co-geformten Schichten für Fahrzeuge nach einem der vorhergehenden Ansprüche, **dadurch gekennzeichnet, dass** sie schalldämpfende Eigenschaften aufweist.

## Revendications

1. Composant pour compartiment moteur en couches co-moulées pour véhicules comprenant :
- une première couche de tissu en fibre de carbone (1) constituée d'une feuille d'épaisseur entre 0,5 mm et 20 mm et d'un poids entre 100 g/m² et 1 000 g/m², adaptée pour être positionnée à l'intérieur d'un moule commun pour moulage par injection avant l'injection de
- une deuxième couche de plastique (2), constituée de n'importe quel polymère thermoplastique, ayant une épaisseur entre 0,5 mm et 5 mm, adaptée pour être fabriquée par rétro-injection dans ledit moule pour moulage par injection contenant ladite première couche de tissu en fibre de carbone (1), déterminant un processus de co-moulage ; ladite rétro-injection ayant lieu à un côté intérieur (1.2) de ladite première couche de tissu en fibre de carbone (1) ;
ladite première couche de tissu en fibre de carbone (1) étant pourvue d'une trame des fibres adaptée pour permettre la pénétration de ladite deuxième couche de plastique (2), durant le processus de co-moulage, pour une épaisseur prédéterminée à partir dudit côté intérieur (1.2) de ladite première couche de tissu en fibre de carbone (1) ; **caractérisé en ce que** ladite première couche de tissu en fibre de carbone (1) est constituée d'une première partie (1.a), aux alentours dudit côté intérieur (1.2), pourvue d'un tissage plus large adapté pour faciliter la pénétration du polymère plastique (2) durant ledit co-moulage jusqu'à l'épaisseur souhaitée ; ladite première couche de tissu en fibre de carbone (1) est également constituée d'une deuxième partie (1.b), aux alentours du côté extérieur (1.1), pourvue d'un tissage plus dense adapté pour ralentir progressivement et finalement bloquer la pénétration du polymère plastique (2) durant ledit co-moulage.

2. Composant pour compartiment moteur en couches co-moulées pour véhicules, selon la revendication 1 précédente, **caractérisé en ce qu'**il comprend une troisième couche barrière (3) constituée de n'importe quel polymère plastique ou résine ou tissu adaptée pour être positionnée dans une position intermédiaire à l'intérieur de ladite première couche de tissu en fibre de carbone (1) ; ladite couche barrière (3) présentant une épaisseur entre 0,3 mm et 2 mm.

3. Composant pour compartiment moteur en couches co-moulées pour véhicules, selon l'une des revendications précédentes, **caractérisé en ce que** ladite couche de plastique (2) est composée de polypropylène ou de polyamide.

4. Composant pour compartiment moteur en couches co-moulées pour véhicules, selon l'une des revendications précédentes, **caractérisé en ce que,** durant le co-moulage, la pénétration de la matière plastique fondue à l'intérieur de la première couche de tissu en fibre de carbone (1) atteint une profondeur entre 2 % et 30 % de l'épaisseur de ladite première couche de tissu en fibre de carbone (1).

5. Composant pour compartiment moteur en couches co-moulées pour véhicules, selon l'une des revendications précédentes, **caractérisé en ce que** ladite deuxième couche de plastique (2) est pourvue d'une pluralité d'évidements d'allégement (2.a).

6. Composant pour compartiment moteur en couches co-moulées pour véhicules, selon l'une des revendications précédentes, **caractérisé en ce que** ladite première couche de tissu en fibre de carbone (1) est pourvue d'une pluralité d'inserts métalliques (4) co-moulés dans celle-ci, adaptés pour servir de support structural.

7. Composant pour compartiment moteur en couches co-moulées pour véhicules, selon l'une des revendications précédentes, **caractérisé en ce que** ladite première couche de tissu en fibre de carbone (1) est pourvue d'au moins un insert métallique (4) comoulé latéralement adapté pour servir de charnière.

8. Composant pour compartiment moteur en couches co-moulées pour véhicules, selon l'une des revendications précédentes, **caractérisé en ce qu'**il est intégralement ignifuge.

9. Composant pour compartiment moteur en couches co-moulées pour véhicules, selon l'une des revendications précédentes, **caractérisé en ce qu'**il présente des propriétés d'insonorisation.
